# EUROPÄISCHE PATENTSCHRIFT

(11) **EP 0 658 582 B1**
(45) Veröffentlichungstag und Bekanntmachung des Hinweises auf die Patenterteilung: **21.07.1999**
(21) Anmeldenummer: 94119598.4
(22) Anmeldetag: 12.12.1994
(51) Int. Cl.: C08G 18/67, C08G 18/81

(54) **Prepolymere, daraus hergestellte radikalisch polymerisierbare Massen und deren Verwendung**
Prepolymers, radically polymerizable compositions prepared therefrom and their use
Prépolymères, compositions polymérisables par voie radicalaire préparées à partir de ceux-ci et leur utilisation

(30) Priorität: 17.12.1993 DE 4343246
(43) Veröffentlichungstag der Anmeldung: 21.06.1995
(73) Patentinhaber: DELO Industrieklebstoffe GmbH & Co. KG, 86899 Landsberg (DE)
(72) Erfinder: Eckhardt, Gunther, Dr., D-82346 Frieding (DE); Lechner, Günther, Dr., D-82237 Wörthsee/Steinebach (DE)
(74) Vertreter: Bunke, Holger, Dr.rer.nat. Dipl.-Chem.

(56) Entgegenhaltungen:
- US-A- 4 295 909
- US-A- 4 607 068
- US-A- 4 822 841

## Beschreibung

Die Erfindung betrifft Prepolymere auf der Basis von mindestens zwei (Meth-)acrylgruppen enthaltenden Verbindungen im Molmassenbereich von 1.000 bis 20.000 g/mol, die außerdem Urethan- und Harnstoffgruppierungen enthalten.

Die Erfindung betrifft weiterhin radikalisch polymerisierbare Massen, die diese Prepolymeren enthalten und für das Kleben, Vergießen, Dichten und Beschichten eingesetzt werden.

Die Verwendung neuer Werkstoffkombinationen in der industriellen Fertigung erfordert in steigendem Umfang den Einsatz von neuen Verbindungstechniken. Dabei kommt den Massen für das Kleben, Vergießen, Dichten und Beschichten eine besondere Bedeutung zu. Bei der Herstellung von Verbunden mit mindestens einem lichtdurchlässigen Partner werden eine hohe Witterungsbeständigkeit des Verbundes und eine hohe Beständigkeit gegenüber dem Einfluß von natürlichem Licht gefordert. Außerdem muß die Masse eine hohe Haftfestigkeit auf den Substraten aufweisen und ausreichend flexibel sein, um den thermisch bedingten Relativbewegungen der Fügepartner ohne Zerstörung des Verbundes zu widerstehen.

So besteht seit langem ein unbefriedigtes Bedürfnis nach einem Klebstoff, mit dem Kunststoff/Kunststoff-, Kunststoff/Glas- und Kunststoff/Metall-Verbindungen hoher Festigkeit und hoher Klimabeständigkeit der Verklebung hergestellt werden können.

Aus der DE-OS 23 24 822 sind photopolymerisierbare Polymere bekannt, die durch Umsetzung eines organischen Di- oder Polyisocyanats mit einem Acrylat oder Methacrylat erhältlich sind, deren Esterkomponente eine Hydroxyl- oder Aminogruppe aufweist. Durch Addition des Acrylates an Diisocyanat-Gruppen entstehen Oligomere, die Urethan- und bzw. oder Ureid-Gruppen aufweisen. Aus diesen bekannten Verbindungen lassen sich durch Zusatz von Polymerisationsinitiatoren, Beschleunigern, Inhibitoren, Verdünnungsmitteln, Verdickungsmitteln und anderen Modifikatoren radikalisch aushärtbare Massen herstellen, die als UV-härtbare Klebstoffe Verwendung finden. Diese bekannten Klebstoffe führen zu harten und spröden Polymerisaten, die beim Verkleben verschiedenartiger Materialien den auftretenden Temperaturwechselspannungen nicht in genügendem Maße standhalten.

In der DE-AS 17 45 063 sind unter anaeroben Bedingungen rasch härtende Massen beschrieben, die aus den gleichen oder sehr ähnlich aufgebauten Monomeren, wie sie aus der DE-OS 23 24 822 bekannt sind, durch Addition von hydroxy- und aminofunktionellen Acrylaten an Polyisocyanate erhältlich sind.

Diese Massen sind nach der Aushärtung hart und spröde und haften nur ungenügend auf den zu verbindenden bzw. abzudichtenden Substraten.

In der DE-OS 26 10 423 wird ein härtbares Klebe- und Versiegelungsmittel aus einem polymerisierbaren Produkt beschrieben, welches ein Reaktionsprodukt eines
a) Poly-(alkylen)-etherpolyols, vorzugsweise eines Glykols mit
(b) entweder
   (i) mindestens einem molaren Äquivalent eines Reaktionsproduktes aus: mindestens einem molaren Äquivalent eines aromatischen oder cycloaliphatischen Polyisocyanates und einem aromatischen oder cycloaliphatischen Polyol oder Polyamin
      oder
   (ii) mindestens einem molaren Äquivalent eines aromatischen oder cycloaliphatischen Polyisocyanats
entspricht, wobei das Produkt aus (a) und (b) (i) oder aus (a) und (b) (ii) anschließend mit mindestens einem molaren Äquivalent eines Acrylsäure- oder Methacrylsäurehydroxyalkylesters oder -aminoalkylesters umgesetzt worden ist.

Die US-PS 4 133 723 beschreibt eine Beschichtungszusammensetzung, die aus mindestens einem ungesättigten Urethanharz besteht, das durch Umsetzung von mindestens einem Polyalkylenoxidpolyol und organischen Isocyanaten erhalten wird.

Den nach beiden Vorschlägen hergestellten Prepolymeren aus Polyolen und insbesondere Poly(alkylen-)etherglykolen und organischen Isocyanaten, insbesondere aromatischen und/oder cycloaliphatischen Diisocyanaten ist gemeinsam, daß sie relativ spröde Massen ergeben, die außerdem zur Verfärbung neigen.

Weiterhin erreicht man durch die Verwendung der nach diesen Vorschlägen hergestellten Prepolymeren in Kleb- und Versiegelungsmassen nur relativ geringe Zugscherfestigkeiten der Verklebungen und niedrige Haftfestigkeiten an Polycarbonat-Substraten.

In der DE-OS 40 25 776 wird ein Prepolymer, eine daraus hergestellte härtbare Masse und deren Verwendung beschrieben. Für die Herstellung dieser Prepolymeren werden Diisocyanate, Hydroxylgruppen-haltige und Aminogruppen-haltige Derivate der Acrylsäure und Methacrylsäure sowie vorzugsweise Polyetherdiamine mit einem durchschnittlichen Molekulargewicht von 1.000 bis 20.000 verwendet, wobei das Molverhältnis bevorzugt 2 : 2 : 1 beträgt und die Prepolymeren zwei (Meth-)acrylgruppen, zwei Urethangruppen und zwei Harnstoffgruppen enthalten.

Nachteilig beim Einsatz dieser Prepolymeren ist die zu geringe Kunststoffhaftung, insbesondere auf Polycarbonat und der Umstand, daß Zubereitungen mit diesen Prepolymeren bei Lagerung im Temperaturbereich von 0 - 10° zu Ausfällungen neigen.

Der Erfindung liegt die Aufgabe zugrunde, Prepolymere und daraus hergestellte radikalisch polymerisierbare Massen bereitzustellen, die eine gute Lagerbeständigkeit auch bei Temperaturen von 0 bis 10°C besitzen, im ausgehärteten Zustand flexible bis zähe Filme ergeben, hohe Verbundfestigkeiten Glas/Glas, Glas/Kunststoff, Glas/Metall, Kunststoff/Metall sowie eine gute Klimabeständigkeit dieser Verbunde ermöglichen und nach den bekannten Verfahren der Initiierung der Radikalkettenpolymerisation schnell aushärten.

Diese Aufgabe wird erfindungsgemäß durch Prepolymere gelöst, die der allgemeinen Formel 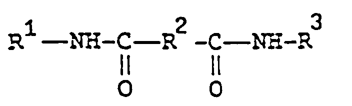 entsprechen und Molmassen im Bereich von 1000 bis 20000 g/mol besitzen und im Molekül durchschnittlich mindestens zwei (Meth-)acrylgruppen sowie außerdem mindestens zwei Harnstoffgruppen und ggf. mindestens zwei Urethangruppen enthalten, wobei die Substituenten R¹, R² und R³ folgende Bedeutungen besitzen:
- R¹ und R³, die gleich oder verschieden sein können, bedeuten unabhängig voneinander jeweils einen (Meth-)acrylat-Rest der Formel 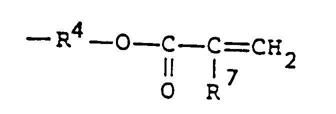
   mit R⁴ = Alkylen, Alkoxyalkylen
   und R⁷ = H, CH₃;
   oder
- R¹ und R³ sind gleich und bedeuten jeweils einen Rest der Formel 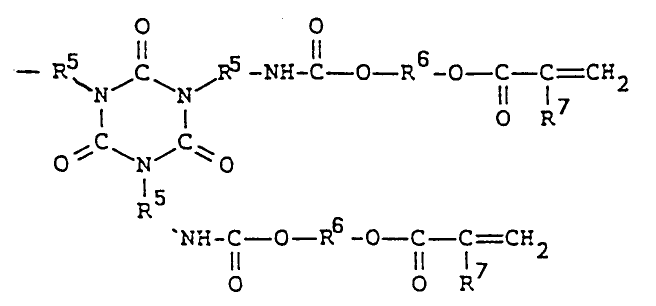 mit
   R⁵ = Alkylen, Cycloalkylen, Arylen, Alkarylen;
   R⁶ = Alkylen, Alkoxyalkylen, Polyalkoxylen;
   R⁷ = H, CH₃;
- R² ist ein substituierter, zweiwertiger Diamin-Rest, ausgewählt aus der Gruppe mit den Formeln 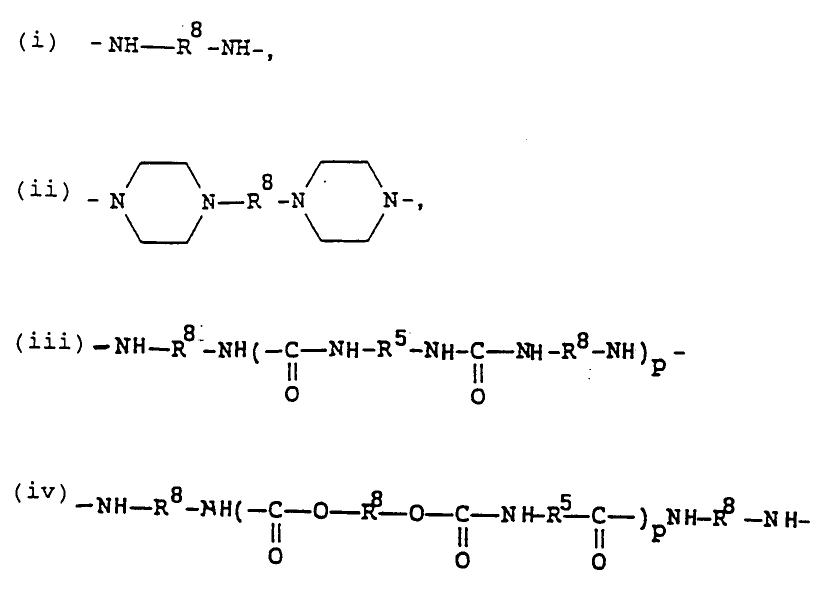 worin
   - R⁵ =: Alkylen, Cycloalkylen, Arylen oder Alkarylen,
   - R⁸: ein lineares Polyetheroligomer, Polyesteroligomer oder Poly(Butadien/Acrylnitril)-Oligomer, welche an ihren Kettenenden jeweils einen zweiwertigen organischen Brückenrest R⁹ tragen, und
   - p: eine ganze Zahl von 1 bis 120 bedeuten
   und worin
   - R⁹: folgende Bedeutungen besitzt:
   a) wenn R⁸ ein Polyetheroligomer ist,
      entweder -CO-NH-R⁵-
      oder -CO-
      oder -CH₂-CH₂-CH₂-;
   b) wenn R⁸ ein Polyesteroligomer ist,
      entweder -O-CO-NH-R⁵-NH-CO-NH-R⁵-
      oder -O-CO-;
   c) wenn R⁸ ein Poly(Butadien/Acrylnitril)-Oligomer ist,
      -CH₂-CH₂-CO-NH-R⁵-,
   wobei
   - R⁵: in allen Fällen die oben genannte Bedeutung besitzt.

Die Aufgabe wird ferner durch die nachfolgend näher beschriebenen und beanspruchten radikalisch aushärtenden Massen und deren Verwendung sowie durch die nachfolgend näher beschriebenen und beanspruchten Herstellungsverfahren gelöst.

Die erfindungsgemäß einzusetzenden Prepolymere werden hergestellt aus Diaminen mit Polyether-, Polyester- oder Butadien/Acrylnitril-Copolymer-Grundstruktur der beschriebenen Zusammensetzung, welche durchschnittlich 1,5 bis 2,5 NH-Endgruppen im Molekül aufweisen, durch Addition mit mindestens difunktionellen Isocyanaten im Molverhältnis NH-Gruppe: Isocyanat von 1 : 1,05 bis 1 : 2,1 und nachfolgende Umsetzung der entstandenen Addukte mit hydroxyfunktionellen Derivaten der Acryl- und/oder Methacrylsäure oder durch partielle Umsetzung von Multiisocyanaten mit hydroxyfunktionellen Derivaten der Acryl- und/oder Methacrylsäure und anschließende Addition der verbleibenden Isocyanatfunktionalitäten an das Diamin.

Zur Herstellung der erfindungsgemäßen Prepolymere sind beispielsweise folgende Hydroxylgruppen-haltige Derivate der Acrylsäure oder der Methacrylsäure geeignet: Hydroxyethylacrylat, Hydroxyethylmethacrylat, Hydroxypropylacrylat und Hydroxypropylmethacrylat.

Weiterhin sind die mehrfach alkoxylierten Derivate der vorgenannten Verbindungen geeignet. Beispiele hierfür sind Polypropylenglykolmonomethacrylate mit 2 - 50 Propylenoxideinheiten.

Für die Herstellung der erfindungsgemäß einzusetzenden Prepolymere werden beispielsweise die nachfolgend aufgeführten aromatischen Diisocyanate verwendet: 2,4-Toluoldiisocyanat, 2,6-Toluoldiisocyanat, 1,5-Naphthalindiisocyanat, 4,4'-Diphenylmethandiisocyanat, 3,3'-Dimethyldiphenyl-4,4'-diisocyanat, p-Phenylendiisocyanat, 3,3'-Dimethyldiphenylmethan-4,4'-diisocyanat und Dianisidindiisocyanat.

Mit Vorteil können jedoch auch die aliphatischen Diisocyanate 1,6-Hexamethylendiisocyanat, 4,4'-Dicyclohexylmethandiisocyanat, 3-Isocyanatomethyl-3,5,5-trimethylcyclohexylisocyanat, 1,4-Cyclohexyldiisocyanat und 2,2,4-(2,4,4-)Trimethylhexamethylendiisocyanat eingesetzt werden. Nach einer bevorzugten Variante des erfindungsgemäßen Verfahrens werden Triisocyanate verwendet. Hierbei kommen insbesondere die Trimerisierungsprodukte von aliphatischen und aromatischen Diisocyanaten zum Einsatz. Typische Vertreter sind die Trimerisationsprodukte des 1,6-Hexamethylen-diisocyanates oder des Isophorondiisocyanates.

Ferner können auch drei- und höherwertige Isocyanate für die Herstellung der erfindungsgemäß einzusetzenden Prepolymere wie beispielsweise Tri-(isocyanatophenyl)methan eingesetzt werden.

Die einzusetzenden Multiisocyanate können auch durch Addition der vorgenannten Isocyanate mit Polyolen hergestellt werden.

Vorzugsweise werden die erfindungsgemäßen Prepolymere dadurch hergestellt, daß Diamine mit Molmassen von 250 bis 2500 g/mol und mit Polyether-, Polyester- oder Butadien/Acrylnitril-Copolymer-Grundstruktur, welche durchschnittlich 1,5 bis 2,5 NH-Endgruppen im Molekül aufweisen, durch Addition an Diisocyanate im Molverhältnis Diamin : Diisocyanat von 1 : 1,05 bis 1 : 2,1 umgesetzt werden und die entstandenen Addukte anschließend mit hydroxyfunktionellen Derivaten der Acryl- und/oder Methacrylsäure umgesetzt werden.

Die erfindungsgemäß einzusetzenden Diamine besitzen Molmassen im Bereich von etwa 1.000 bis 18.000 und enthalten 1,5 bis 2,5 NH-Endgruppen je Molekül. Diese Endgruppen sind über die genannten, als Reste "R⁹" bezeichneten organischen Brückenmoleküle an Oligomere vom Typ der Polyether, Polyester oder Mischpolymerisate aus Butadien und Acrylnitril gebunden.

Als zweiwertiger organischer Brückenrest "R⁹" wird vorzugsweise ein zweiwertiger Rest mit einer Molmasse von ≤ 300 g/mol verstanden, der aus den Elementen C, H, O und ggfs. N und S besteht und die Verbindung zwischen dem funktionalisierten Oligomer und dem primären oder sekundären Amin der Endgruppe des Diamins bildet.

Weitere bevorzugte Möglichkeiten zur Herstellung der Diamine für die erfindungsgemäß einzusetzenden Prepolymere bestehen in einer Mehrfachaddition von Diaminen mit Molmassen im Bereich von 250 bis 2.500 g/mol mit Diisocyanaten im Verhältnis von 1 : 0,5 bis 1 : 0,95. Die Diamine können jedoch auch durch Polyaddition von Diolen, die vorzugsweise Molmassen von 250 bis 600 g/mol besitzen, mit Diisocyanaten im Molverhältnis von 0,5 : 1 bis 0,95 : 1 sowie nachfolgende Addition eines relativ niedermolekularen Diamins im Molverhältnis Preaddukt : Diamin wie 1 : 1,1 bis 1 : 2,1 erhalten werden.

Nach einer besonders bevorzugten Variante des erfindungsgemäßen Verfahrens wird von einem Diamin ausgegangen, das Molmassen zwischen 1.000 bis 10.000 besitzt, dessen Grundkörper ein Copolyether aus Ethylenoxid und Tetrahydrofuran im Molverhältnis 1 : 2,5 bis 1 : 5 darstellt, wobei das primär erzeugte Diol durch Umsetzung mit Phosgen sowie nachfolgende Weiterumsetzung mit einem niedermolekularen Diamin zu dem gewünschten Diamin modifiziert wird.

Eine weitere bevorzugte Variante des erfindungsgemäßen Verfahrens zur Herstellung der Prepolymere besteht darin, Polyetherdiole, vorzugsweise mit Molmassen von 250 bis 6000 g/mol, und insbesondere die vorgenannten Mischpolyetherderivate zu phosgenieren und die Phosgenierungsprodukte dieser Polyether umzusetzen mit Diaminen im Molverhältnis von 1 : 1,05 bis 1 : 2.

Die Herstellung der erfindungsgemäßen Prepolymere erfolgt im Temperaturbereich von +20 bis +80°C, wobei bei der Umsetzung Lösemittel und Katalysatoren eingesetzt werden können.

Die Herstellung wird in mehreren Stufen ausgeführt und der Reaktionsfortschritt mittels analytischer Methoden (Gaschromatographie, Titration, IR-Spektroskopie) bewertet. Die Umsetzungsprodukte haben meist eine hochviskose, wachsartige oder feste Konsistenz und können zur besseren Handhabung mit Monomeren verdünnt werden. Die Prepolymere können entweder mit oder ohne weitere Vorbehandlung oder nach Wasch- und Trocknungsprozessen eingesetzt werden.

Die erfindungsgemäßen Prepolymere werden mit besonderen Vorteilen in einkomponentigen Massen eingesetzt, die unter Einwirkung von Licht des Wellenlängenbereiches von 315 bis 550 nm aushärten.

Diese Massen enthalten mindestens einen Photoinitiator, der bei Bestrahlung mit Licht dieses Wellenlängenbereiches in Radikale zerfällt.

Der Einsatz der Prepolymere gemäß vorliegender Erfindung ist auch in Massen möglich, die unter Einwirkung von Elektronenstrahlen aushärten.

Die erfindungsgemäßen Prepolymere können auch in zweikomponentigen Zubereitungen eingesetzt werden. Dabei können sowohl Zubereitungen formuliert werden, die nur relativ niedermolekulare polymerisationsfähige Verbindungen und diese Prepolymere enthalten, als auch solche, die zusätzlich noch Hochpolymere, wie bestimmte Kautschuke oder Acrylharze, enthalten.

Die Verarbeitung dieser Zweikomponenten-Systeme kann sowohl durch Vormischung der beiden Komponenten entweder per Hand oder in geeigneten Mischeinrichtungen oder auch nach den sogenannten No-mix-Verfahren wie:
- A/B-Verarbeitung (getrennter Auftrag beider Komponenten auf ein Substrat und partielle Mischung durch den Fügeprozeß)
- Verwendung einer Peroxidzubereitung (vorheriger Auftrag auf ein Substrat)
- Verwendung einer Aktivator-Zubeitung
erfolgen.

Unter Verwendung der erfindungsgemäßen Prepolymere können ebenfalls vorteilhafte einkomponentige Massen hergestellt werden, die unter anaeroben Bedingungen aushärten. Hierbei wird den Massen ein Redox-Initiierungssystem hinzugefügt, das bei Sauerstoffausschluß und Metallkontakt die zur Polymerisationseinleitung erforderlichen Radikale liefert.

Die Herstellung der erfindungsgemäßen Prepolymere, die daraus erzeugten Massen und deren Verwendung werden in den nachfolgenden Beispielen beschrieben.

### Beispiele:

### Herstellung der Prepolymere

In einem beheizbaren Rührwerk von 30 l Inhalt mit Luftein- und -ausleitung, Einfüllöffnungen und Bodenabgang wurde das entwässerte Diamin, ggfs. nach vorherigem Aufschmelzen, vorgelegt und das Addukt aus Multiisocyanat und Hydroxyalkyl(meth-)acrylat innerhalb von 30 Minuten zugegeben.

Die Reaktionstemperatur wurde über 4 Stunden im Bereich von 45 bis 55°C gehalten.

Der Restisocyanatgehalt und der Doppelbindungsgehalt der Umsetzungsprodukte wurde titrimetrisch bestimmt.

**Tabelle 1** enthält die Beschreibung der drei Grundkomponenten der erfindungsgemäßen Prepolymere (Diamin, Multiisocyanat, Hydroxyalkyl(meth-/acrylat) sowie das zur Herstellung der Prepolymere A bis G eingestellte Molverhältnis der Grundkomponenten.

Die Prepolymere wurden ohne weitere Reinigungsoperationen, aber verdünnt mit Hydroxypropylmethacrylat, eingesetzt.

### Herstellung und Prüfung von photopolymerisierbaren Zubereitungen

Durch Einlösen der angegebenen Photoinitiatoren in die Zubereitungen in einem Dunkelraum wurden die in **Tabelle 2** charakterisierten UV- bzw. lichthärtenden Zubereitungen hergestellt.

Als Photoinitiatoren wurden 1-Hydroxycyclohexylphenylketon (Irgacure 184; Ciba Geigy) und p,-n-Butylphenylbisacylphosphinoxid (ESPE) verwendet.

Für die Verklebungen wurden Körper der Abmessungen 20 x 20 x 5 mm aus Glas, Polycarbonat (PC) und Polymethylmethacrylat (PMMA) verwendet.

Zur Verklebung wurde ein Fügepartner mit der photopolymerisierbaren Zubereitung versehen, mit einer Kraft von 5 N und einer Überlappung von 5 mm der zweite Prüfkörper aufgelegt und die Paarung unter einer Lampe im geeigneten Wellenlängenbereich innerhalb von 60 Sekunden ausgehärtet. Für die Aushärtung der Zubereitungen, die den Photoinitiator Irgacure 184 enthielten, wurde die Lampe Delo-Lux 03 (Emissionsbereich 320 bis 600 nm) und für die Zubereitungen, die den Photoinitiator p,n-Butylphenylbisacylphosphinoxid enthielten, die Lampe Delo-Lux 01 (Emissionsbereich 400 bis 500 nm verwendet.

Es wurden jeweils 5 Prüfkörperpaare hergestellt und die Druckscherfestigkeit der Verklebungen mit einer Prüfgeschwindigkeit von 10 mm/min. ermittelt.

Die Ergebnisse der Untersuchungen sind in **Tabelle 3** enthalten.

Die Prüfergebnisse zeigen ein sehr hohes Niveau der Verbundfestigkeiten, wobei besonders auffällig ist, daß sowohl auf Glas als auch auf den Kunststoffen PMMA und PC sehr gute Haftungswerte erzielt werden.

Die Verbindungen mit den erfindungsgemäßen Zubereitungen zeichnen sich außerdem durch hohe Beständigkeiten bei Einwirkung von heißem Wasser aus.

Weiterhin wurden die Zubereitungen gemäß den Beispielen 2, 10 und 11 (vgl. Tabelle 2) in einer 50 µm dicken Schicht auf mittels Isopropanol im Ultraschallbad gereinigte Aluminiumbleche und auf mit Isopropanol gereinigte Glasscheiben aufgetragen und innerhalb von 20 Sekunden unter der Lampe Delo-Lux 03 ausgehärtet.

Es konnten auf diese Weise flexible und festhaftende Beschichtungen mit nur sehr geringer Oberflächenklebrigkeit erhalten werden.

### Herstellung von Zubereitungen zur Verarbeitung nach dem Peroxidlack- und A/B-Verfahren

Bei der Herstellung der hochpolymerhaltigen Zubereitungen Beispiele 14 und 15 gemäß **Tabelle 4** wurden in einem Rührgefäß mit Be- und Entlüftung die monofunktionellen Methacrylate sowie der Stabilisator (200 ppm 2,6-Ditert.-butyl-4-methyl-phenol) vorgelegt und das Hochpolymere eingebracht.

Die Auflösung wurde bei einer Temperatur von 50°C vorgenommen und war nach 6h beendet. Die Vollständigkeit der Auflösung wurde visuell beurteilt.

Die Ansätze wurden nach 24h noch einmal gemischt und die restlichen Komponenten zugesetzt.

Die Herstellung der nicht hochpolymerhaltigen Zubereitungen (Beispiele 16 und 17 gemäß **Tabelle 4**) erfolgte durch intensives Vermischen der Komponenten bei Raumtemperatur im Zeitraum von einer Stunde.

### Ausführung von Verklebungen nach einem Peroxidlack- und A/B-Verfahren

Die Verklebung mit den in **Tabelle 4** beschriebenen Klebstoffzubereitungen entsprechend den Beispielen 15, 16 und 17 wurden nach einem Peroxidlackverfahren ausgeführt.

Hierzu wurde ein Peroxidlack durch Auflösung von 20 Masseteilen einer handelsüblichen festen Benzoylperoxidzubereitung mit einem Benzoylperoxidgehalt von 49 % und von 2,3 Masseteilen eines Polymethylmethacrylates in 51,2 Masseteilen Methylethylketon und 26,5 Masseteilen Dichlormethan hergestellt und diese Lösung mit einem Pinsel auf die nach DIN 53281/1 präparierten Aluminiumbleche einmalig und dünn aufgetragen. Die Verklebungen erfolgten nach 24 Stunden Lagerzeit der so mit einem Peroxidfilm überzogenen Bleche.

Zur Kontrolle der Fugendicke wurden 0,05 mm starke halbkreisförmig gebogene Edelstahldrahtstücke auf die beschichteten Bleche gelegt. Es wurden dann auf je ein nach DIN 53281/1 präpariertes Aluminiumblech die Zubereitungen aufgetragen, die beiden Partner durch Auflegen bei 12 mm Überlappung, kurzes Anpressen (2s) mit 20 N und mit einer Dauerbelastung (24h) von 5 N gefügt. Die Ausprüfung der Verklebungen erfolgte nach 24 Stunden.

Die Verklebung mit den in **Tabelle 4** beschriebenen Klebstoffzubereitungen entsprechend den Beispielen 14 und 15 erfolgte nach einem A/B-Verfahren.

Die A-Komponente (Beispiel 15) und die B-Komponente (Beispiel 14) wurden jeweils getrennt auf je ein nach DIN 53281/1 präpariertes Aluminiumblech aufgetragen, sofort gefügt und unter einer Belastung von 5 N ausgehärtet. Die Bestimmung der Zugscherfestigkeit erfolgte in Anlehnung an die DIN 53283.

Die Ergebnisse der Ausprüfungen sind in der **Tabelle 5** zusammengestellt.

### Herstellung und Prüfung von anaerob härtenden Zubereitungen

Unter Verwendung der Prepolymeren gemäß **Tabelle 1** wurden unter Luftabschluß und bei Metallkontakt härtende Zubereitungen hergestellt.

In **Tabelle 6** sind die Zusammensetzungen der Zubereitungen aufgeführt.

Die Charakterisierung der Zubereitungen erfolgte durch konzentrisch überlappende Verklebungen gemäß DIN 54452.

Aus **Tabelle 6** geht hervor, daß mit den erfindungsgemäßen Prepolymeren anaerob härtende Methacrylatzubereitungen formuliert werden können, die sich durch gute Reaktivität und hohe Druckscherfestigkeiten der Verklebung sowie eine sehr gute Lagerbeständigkeit der Zubereitung auszeichnen.

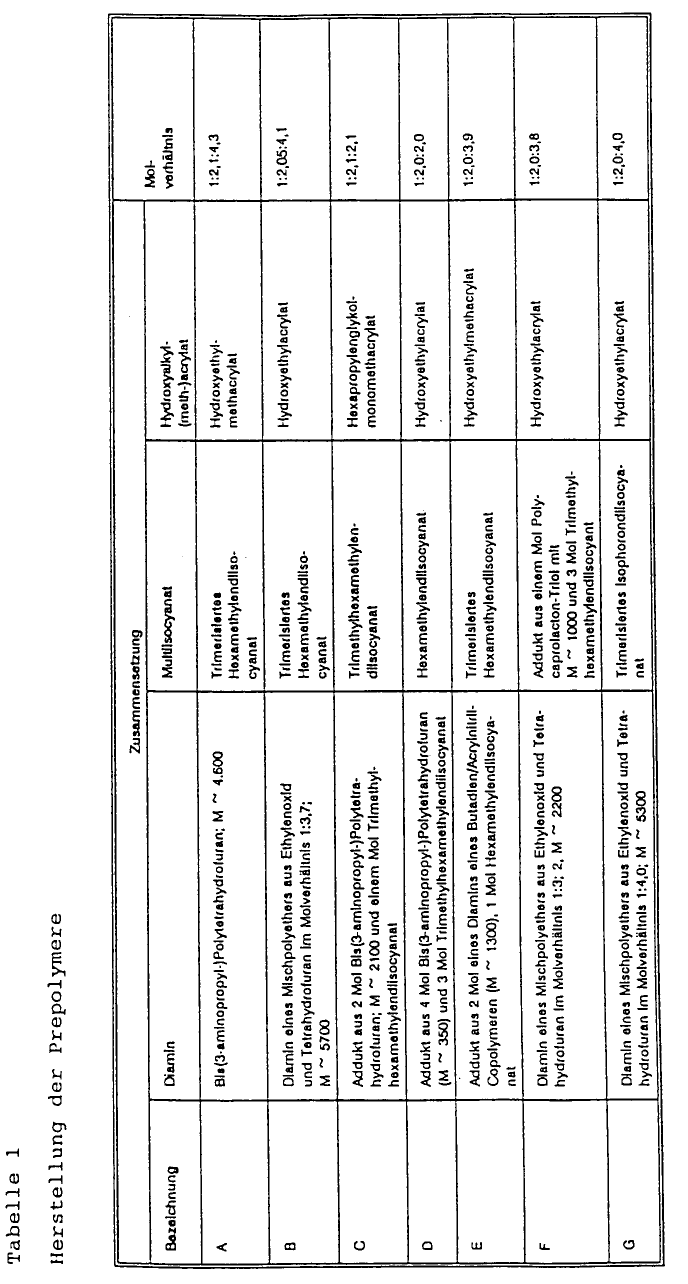

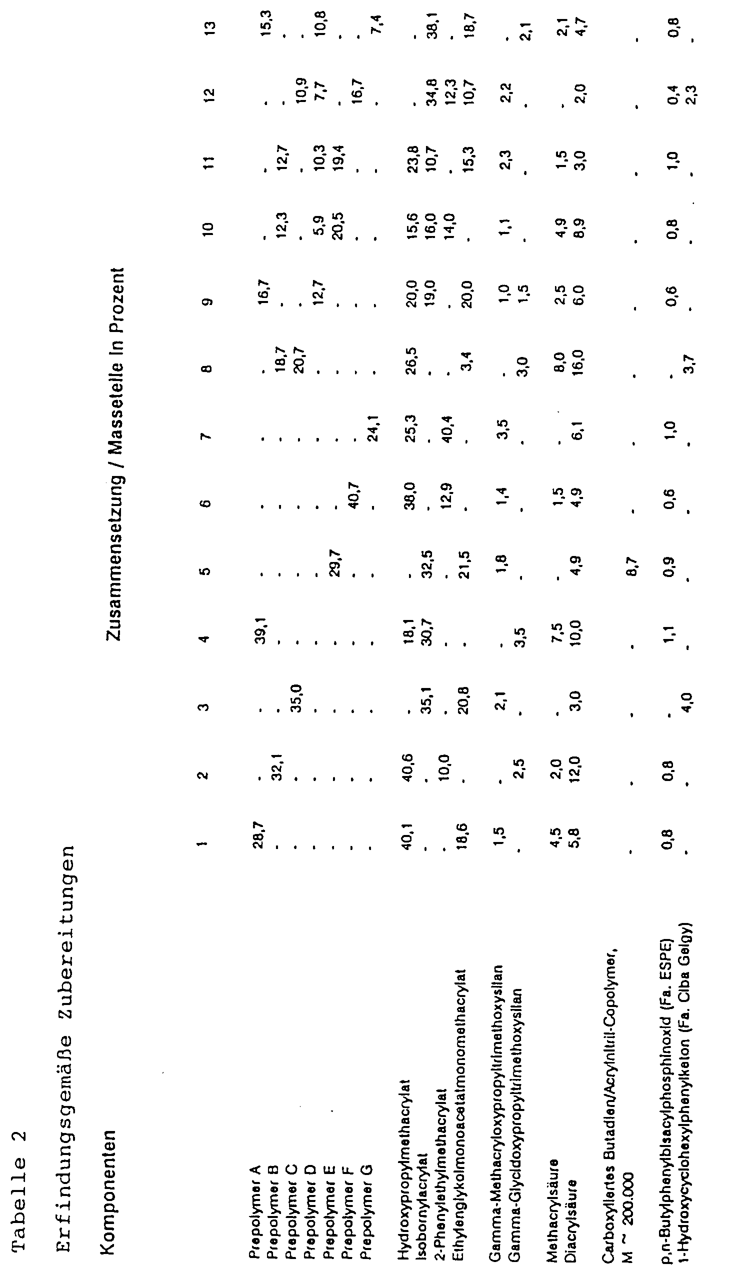

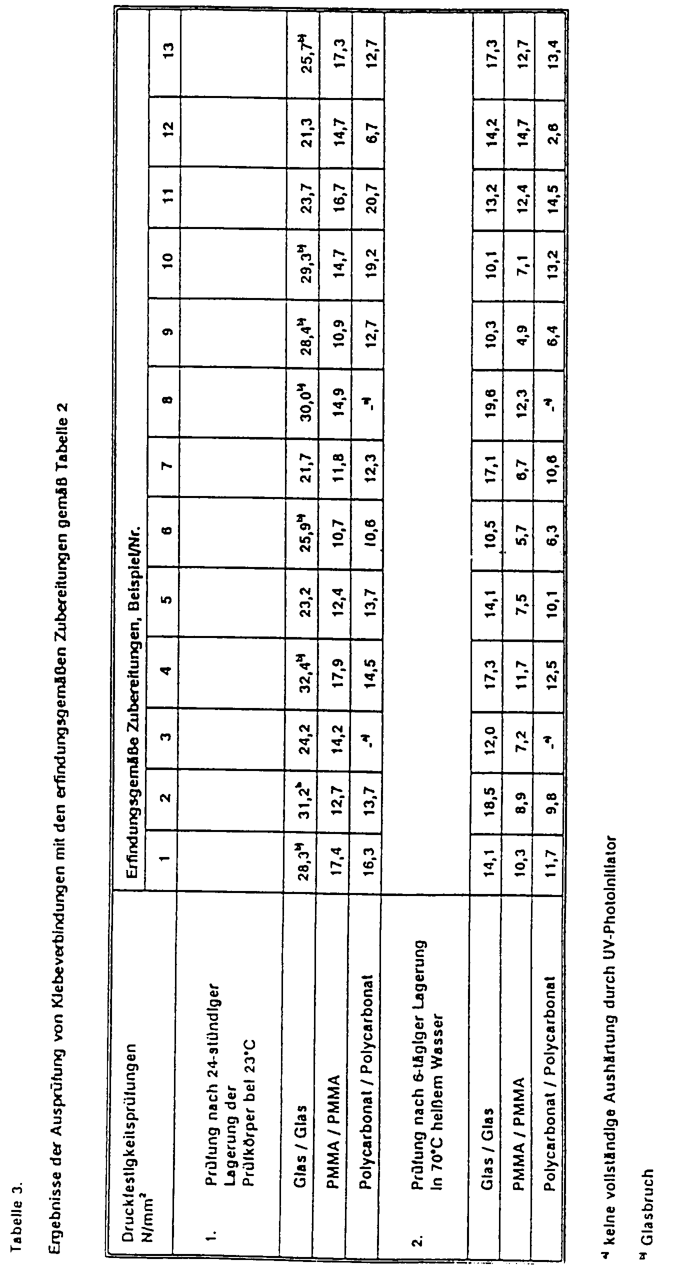

**Tabelle 4**

| Erfindungsgemäße Zubereitungen | | | | |
|---|---|---|---|---|
| Komponenten | Zusammensetzung/Masseteile in Prozent | | | |
| | Beispiel - Nr. | | | |
| | 14 | 15 | 16 | 17 |
| Prepolymer E | 27,7 | 26,6 | - | - |
| Prepolymer C | - | - | 37,1 | - |
| Prepolymer D | - | - | - | 32,3 |
| Hydroxypropylmethacrylat | 10,5 | 12,0 | 25,3 | 8,9 |
| Isobornylmethacrylat | 21,2 | 20,6 | - | 17,3 |
| Isobornylacrylat | - | - | 25,4 | 10,4 |
| Ethylenglykolmonoacetatmonomethacrylat | 19,7 | 22,8 | - | 9,1 |
| Methacrylsäure | 3,1 | 2,3 | 3,7 | 4,8 |
| Diacrylsäure | 4,9 | 4,7 | 4,8 | 12,0 |
| Gamma-Glycidoxypropyltrimethoxysilan | 1,8 | 1,7 | 1,2 | 2,5 |
| Carboxyliertes Butadien/Acrylnitril-Copolymer M_{w}=200.000) | 8,5 | 7,1 | - | - |
| Benzoylperoxid (rein) | 2,6 | - | - | - |
| Di-ethylanilin | - | 0,7 | 1,0 | 1,1 |
| N,N-Bis(hydroxyethyl)-p-toluidin | - | 1,5 | 1,5 | 1,5 |

**Tabelle 5**

| Ergebnisse der Zugscherfestigkeitsprüfungen von verklebten Aluminium-Blechen | | |
|---|---|---|
| Zubereitung gemäß Patentbeispiel | Verarbeitungsart | Zugscherferstigkeit nach DIN 5383 N/mm² |
| 15 | Peroxidlack-Verfahren | 19,8 |
| 16 | | |
| | Peroxidlack- Verfahren | 19,1 |
| 17 | | |
| | Peroxidlack- Verfahren | 21,9 |
| 14 | | |
| | | 24,7 |
| 15 | A/B Verfahren | |
| Die ausgehärteten Klebfilme der erfindungsgemäßen Zubereitungen gemäß den Beispielen 14 bis 17 zeichneten sich durch eine sehr gute Fiexibilität aus. | | |

**Tabelle 6**

| Zusammensetzung und Ausprüfergebnisse von anaerob härtenden Zubereitungen Zusammensetzung | | | |
|---|---|---|---|
| Komponenten | Masseteile in Prozent Patentbeispiel-Nr. | | |
| | 18 | 19 | 20 |
| Prepolymer A | 15,7 | - | - |
| Prepolymer D | - | 20,1 | - |
| Prepolymer E | - | - | 27,4 |
| Diurethandimethacrylat (PLEX 6661-0, Fa. Röhm) | - | 71,42 | - |
| Triethylenglykoldimethacrylat | 74,42 | - | 39,5 |
| Tetrahydrofurfurylmethacrylat | - | - | 22,7 |
| Methacrylsäure | 4,9 | 2,3 | 3,1 |
| Ethylenglykoldimethacrylat | 1,8 | 2,7 | 4,2 |
| Saccharin | 1,0 | 1,0 | 0,9 |
| Cumenhydroperoxid, 80%ig | 1,31 | 1,52 | 1,10 |
| Pyrogallol | 0,1 | 0,12 | 0,08 |
| Trilon-B | 0,02 | 0,02 | 0,02 |
| N,N-Dimethyl-p-toluidin | 0,75 | 0,82 | 1,00 |

| Ausprüfergebnisse | | | |
|---|---|---|---|
| * Druckscherfestigkeit/DIN 54452 [N/mm²] | 15,1 | 21,3 | 12,3 |
| * Lagerfähigkeit bei 23°C (Monate) | >12 | >12 | >12 |
| * Handfestigkeit nach ... Minuten | 10 | 8 | 15 |

## Patentansprüche

1. Prepolymere der allgemeinen Formel 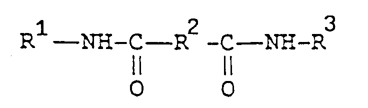 mit Molmassen im Bereich von 1000 bis 20000 g/mol und mit durchschnittlich mindestens zwei (Meth-)acrylgruppen sowie außerdem mindestens zwei Harnstoffgruppen und ggf. mindestens zwei Urethangruppen im Molekül, wobei die Substituenten R¹, R² und R³ folgende Bedeutungen besitzen:
- R¹ und R³, die gleich oder verschieden sein können, bedeuten unabhängig voneinander jeweils einen (Meth-)acrylat-Rest der Formel 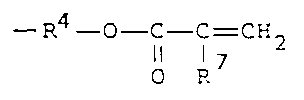
mit R⁴ = Alkylen, Alkoxyalkylen
und R⁷ = H, CH₃;
oder
- R¹ und R³ sind gleich und bedeuten jeweils einen Rest der Formel 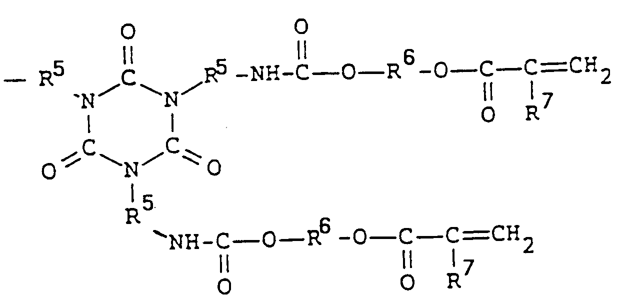 mit
R⁵ = Alkylen, Cycloalkylen, Arylen, Alkarylen;
R⁶ = Alkylen, Alkoxyalkylen, Polyalkoxylen;
R⁷ = H, CH₃;
- R² ist ein substituierter, zweiwertiger Diamin-Rest, ausgewählt aus der Gruppe mit den Formeln 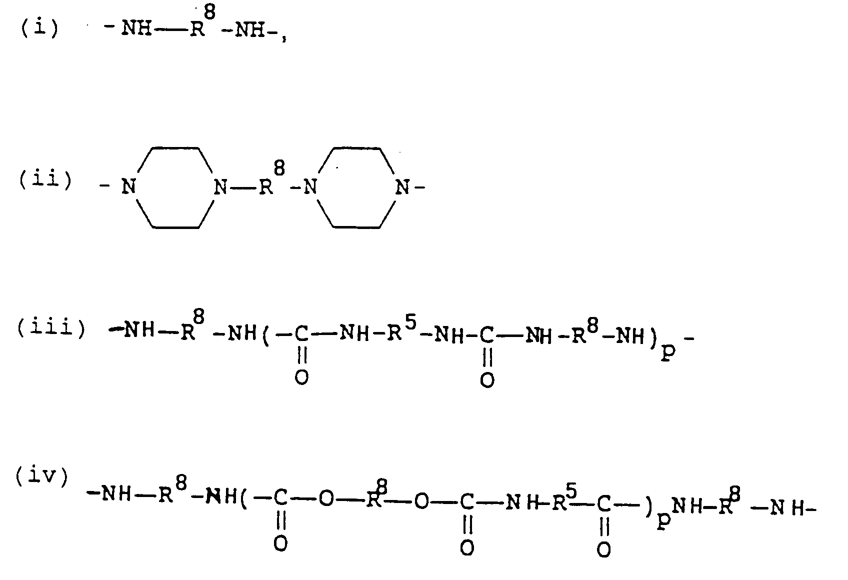 worin
R⁵ = Alkylen, Cycloalkylen, Arylen oder Alkarylen,
R⁸ ein lineares Polyetheroligomer, Polyesteroligomer oder Poly(Butadien-/Acrylnitril)-Oligomer, welche an ihren Kettenenden jeweils einen zweiwertigen organischen Brückenrest R⁹ tragen, und
p eine ganze Zahl von 1 bis 120 bedeuten
und worin
R⁹ folgende Bedeutungen besitzt:
a) wenn R⁸ ein Polyetheroligomer ist,
entweder -CO-NH-R⁵-
oder -CO-
oder -CH₂-CH₂-CH₂-;
b) wenn R⁸ ein Polyesteroligomer ist,
entweder -O-CO-NH-R⁵-NH-CO-NH-R⁵-
oder -O-CO-;
c) wenn R⁸ ein Poly(Butadien/Acrylnitril)-Oligomer ist,
-CH₂-CH₂-CO-NH-R⁵-,
wobei
R⁵ in allen Fällen die oben genannte Bedeutung besitzt.

2. Prepolymere nach Anspruch 1, dadurch gekennzeichnet, daß sie durchschnittlich drei bis vier (Meth-)acrylgruppen, drei bis vier Urethangruppen und mindestens zwei Harnstoffgruppen im Molekül enthalten.

3. Prepolymere nach Anspruch 1, worin R⁸ ein Polyetheroligomer der Formel 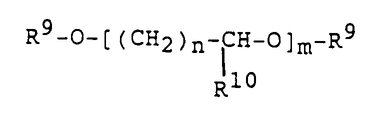 ist,
worin
R¹⁰ = H oder C₁-C₄-Alkyl,
n eine ganze Zahl von 1 bis 5 und
m eine ganze Zahl von 1 bis 250
bedeuten.

4. Verfahren zur Herstellung der Prepolymere gemäß einem der Ansprüche 1 bis 3, dadurch gekennzeichnet, daß Diamine mit Polyether-, Polyester- oder Butadien/Acrylnitril-Copolymer-Grundstruktur, welche durchschnittlich 1,5 bis 2,5 NH-Endgruppen im Molekül aufweisen, durch Addition mit mindestens difunktionellen Isocyanaten im Molverhältnis NH-Gruppe : Isocyanat von 1 : 1,05 bis 1 : 2,1 umgesetzt werden und die entstandenen Addukte anschließend mit hydroxyfunktionellen Derivaten der Acryl- und/oder Methacrylsäure umgesetzt werden.

5. Verfahren zur Herstellung der Prepolymere gemäß einem der Ansprüche 1 bis 3, dadurch gekennzeichnet, daß Multiisocyanate mit hydroxyfunktionellen Derivaten der Acryl- und/oder Methacrylsäure partiell umgesetzt werden und die verbleibenden Isocyanatfunktionalitäten anschließend an Diamine mit Polyether-, Polyester- oder Butadien/Acrylnitril-Copolymer-Grundstruktur, welche durchschnittlich 1,5 bis 2,5 NH-Endgruppen im Molekül aufweisen, addiert werden.

6. Verfahren nach Anspruch 5, dadurch gekennzeichnet, daß als Multiisocyanate die Trimerisierungsprodukte aliphatischer, cycloaliphatischer oder aromatischer Diisocyanate eingesetzt werden.

7. Verfahren nach Anspruch 6, dadurch gekennzeichnet, daß als Trimerisierungsprodukte der Diisocyanate solche vom Typ der Trisisocyanato-Triazine verwendet werden.

8. Verfahren nach Anspruch 7, dadurch gekennzeichnet, daß die Trisisocyanato-Triazine mit Hydroxyalkyl(meth-)acrylaten im Molverhältnis 1 : 1,1 bis 1 : 2 umgesetzt werden.

9. Verfahren nach Anspruch 8, dadurch gekennzeichnet, daß trimerisiertes Hexamethylendiisocyanat vom Triazin-Typ im Molverhältnis Triazin : Hydroxyalkyl(meth-)acrylate von 1 : 1,8 bis 1 : 2 verwendet wird.

10. Prepolymere nach Anspruch 1, dadurch gekennzeichnet, daß sie mindestens zwei (Meth-)acrylgruppen, mindestens zwei Urethangruppen und mehr als zwei Harnstoffgruppen im Molekül enthalten.

11. Verfahren zur Herstellung der Prepolymere gemaß Anspruch 1 oder 10, dadurch gekennzeichnet, daß Diamine mit Molmassen von 250 bis 2500 g/mol und mit Polyether-, Polyester- oder Butadien/Acrylnitril-Copolymer-Grundstruktur, welche durchschnittlich 1,5 bis 2,5 NH-Endgruppen im Molekül aufweisen, durch Addition an Diisocyanate im Molverhältnis Diamin : Diisocyanat von 1 : 1,05 bis 1 : 2,1 umgesetzt werden und die entstandenen Addukte anschließend mit hydroxyfunktionellen Derivaten der Acryl- und/oder Methacrylsäure umgesetzt werden.

12. Verfahren nach Anspruch 11, dadurch gekennzeichnet, daß die Diamine erzeugt werden durch Addition von Diolen im Molmassenbereich von 250 bis 600 g/mol an Diisocyanate im Molverhältnis Diol : Diisocyanat von 0,5 : 1 bis 0,95 : 1 unter Bildung eines Preaddukts und nachfolgende Addition eines Diamins im Molverhältnis Preaddukt : Diamin von 1 : 1,1 bis 1 : 2,1.

13. Verfahren nach Anspruch 11, dadurch gekennzeichnet, daß die Prepolymere erzeugt werden durch Phosgenierung von Diolen einer Molmasse von 250 bis 6000 g/mol und nachfolgende Umsetzung der Phosgenierungsprodukte mit Diaminen im Molverhältnis 1 : 1,05 bis 1 : 2.

14. Lichtinitiiert radikalisch aushärtende Massen, enthaltend:
(A) 5 bis 90 Masseteile mindestens eines Prepolymeren gemäß den Ansprüchen 1 bis 3 oder 10 und
(B) 0,1 bis 10 Masseteile mindestens eines Photoinitiators, der bei Bestrahlung im Wellenlängenbereich von 315 bis 550 nm unter Bildung freier Radikale zerfällt.

15. Masse nach Anspruch 14, dadurch gekennzeichnet, daß sie 0,5 bis 4 Masseteile der Komponente (B) enthält.

16. Lichtinitiiert radikalisch polymerisierende Massen, enthaltend:
(A) 5 bis 80 Masseteile mindestens eines Prepolymeren gemäß den Ansprüchen 1 bis 3 oder 10,
(B) 0,1 bis 2 Masseteile eines oder mehrerer Photoinitiatoren aus der Gruppe der Bisacylphosphinoxide,
(C) 0,1 bis 30 Masseteile mindestens eines Säuremonomeren der allgemeinen Formel 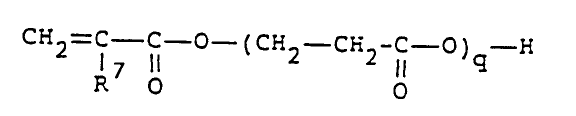 worin q Null oder eine ganze Zahl von 1 bis 10 und R⁷ ein Wasserstoffatom oder eine Methylgruppe bedeuten,
(D) 0 bis 60 Masseteile Verdünnermonomere aus der Gruppe der Hydroxyalkyl(meth-)acrylate, Alkyl(meth-)acrylate, Aralkyl(meth-)acrylate, Cycloalkyl(meth-)acrylate oder Alkoxyalkyl (meth-)acrylate.

17. In Abwesenheit von Sauerstoff und bevorzugt bei Metallkontakt radikalisch aushärtende einkomponentige Massen, enthaltend
(A) 5 bis 80 Masseteile mindestens eines Prepolymeren gemäß den Ansprüchen 1 bis 3 oder 10,
(B) 0,3 bis 2,0 Masseteile Cumolhydroperoxid,
(C) 0,1 bis 2,0 Masseteile Saccharin,
(D) 0,1 bis 2,0 Masseteile eines aromatischen tertiären Amins,
(E) 0 bis 60 Masseteile Modifikatoren wie Stabilisatoren, Komplexbildner, Verdünnermonomere und Säuremonomere.

18. Bei Wärmezufuhr radikalisch aushärtende einkomponentige Massen, enthaltend
(A) 5 bis 80 Masseteile mindestens eines Prepolymeren gemäß den Ansprüchen 1 bis 3 oder 10,
(B) 0,1 bis 5 Masseteile einer peroxidischen Verbindung aus der Gruppe der Diacylperoxide, Perester und Hydroperoxide,
(C) 20 bis 60 Masseteile Verdünnermonomere und Säuremonomere,
(D) 0 bis 60 Masseteile Modifikatoren wie Stabilisatoren und Komplexbildner.

19. Bei Raumtemperatur radikalisch aushärtende zweikomponentige Zubereitungen, enthaltend
(A) 5 bis 80 Masseteile mindestens eines Prepolymeren gemäß den Ansprüchen 1 bis 3 oder 10,
(B) ein Redox-Initiierungssystem, bestehend aus mindestens einer peroxidischen Verbindung und mindestens einem Amin sowie gegebenenfalls einer Verbindung eines Übergangsmetalls, wobei peroxidische Verbindungen und Amin jeweils getrennt in je einer Komponente der Zubereitung enthalten sind,
(C) Verdünnermonomere und Säuremonomere,
(D) gegebenenfalls weitere Modifikatoren wie Stabilisatoren, Komplexbildner, Haftvermittler, hochpolymere Verdicker, Thixotropiermittel.

20. Radikalisch infolge von mindestens zwei Mechanismen der Radikalbildung aushärtende einkomponentige Zubereitungen, enthaltend
(A) 5 bis 80 Masseteile mindestens eines Prepolymeren gemäß den Ansprüchen 1 bis 3 oder 10,
(B) 0,1 bis 2 Masseteile mindestens eines Photoinitiators, der im Wellenlängenbereich von 315 bis 550 nm in freie Radikale zerfällt,
(C) 0,1 bis 3 Masseteile mindestens einer peroxidischen Verbindung, die entweder thermisch oder in Abwesenheit von Sauerstoff katalytisch unter Bildung freier Radikale zerfällt,
(D) 20 bis 60 Masseteile Verdünnermonomere und Säuremonomere,
(E) gegebenenfalls weitere Modifikatoren wie Beschleuniger, Stabilisatoren, Komplexbildner, Haftvermittler, hochpolymere Verdicker, Thixotropiermittel.

21. Masse nach einem der Ansprüche 14 bis 20, dadurch gekennzeichnet, daß sie 15 bis 45 Masseteile der Komponente (A) enthält.

22. Verwendung der Massen gemäß einem der Ansprüche 14 bis 21 zum Kleben, Abdichten, Vergießen und Beschichten von Substraten.

## Claims

1. Prepolymers of the general formula 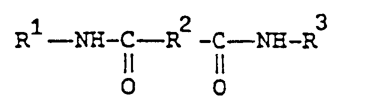 having mole masses in the range of from 1,000 to 20,000 g/mole and having on average at least two (meth-) acryl groups as well as, additionally, at least two urea groups and, optionally, at least two urethane groups in the molecule, where the substituents R¹, R² and R³ signify the following:
- R¹ and R³, which are identical or different, independently of one another each signify a (meth)-acrylate residue of the formula 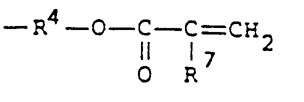 where
R⁴ = alkylene, alkoxyalkylene
and R⁷ = H, CH₃;
or
- R¹ and R³ are the same and each signify a residue of the formula: 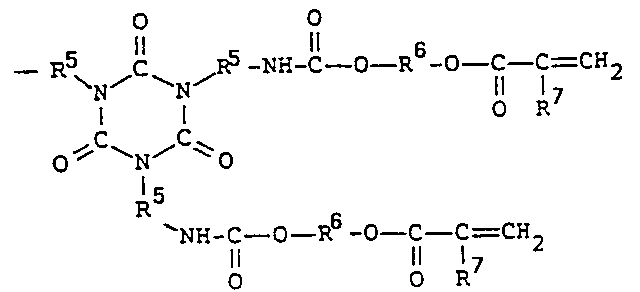 where
R⁵ = alkylene, cycloalkylene, arylene, alkarylene;
R⁶ = alkylene, alkoxyalkylene, polyalkoxylene;
R⁷ = H, CH₃;
- R² is a substituted, bivalent diamine residue selected from the group of the formulae: 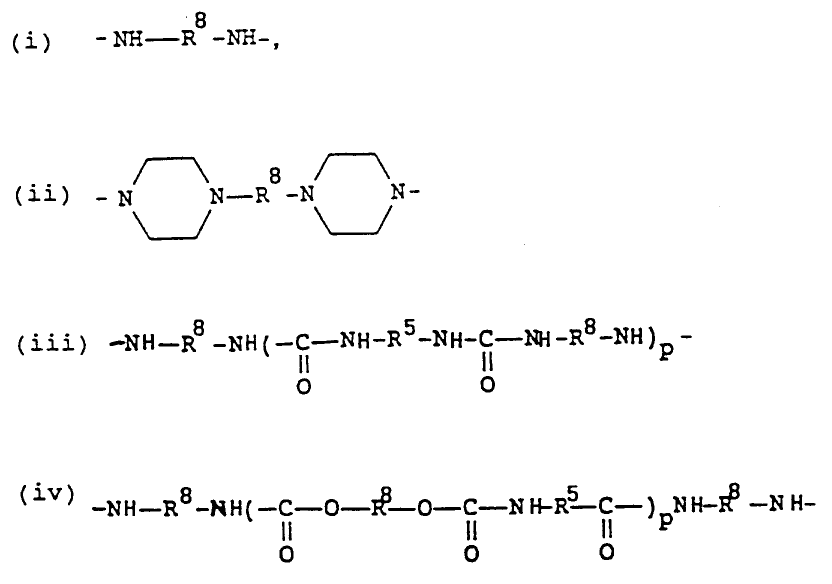 where
R⁵ = alkylene, cycloalkylene, arylene or alkarylene
R⁸ = a linear polyetheroligomer, polyesteroligomer or poly(butadiene-/acrylnitrile)-oligomer, which each carry a bivalent organic bridge residue R⁹ at their chain ends and
p = an integer of from 1 to 120
and where
R⁹ signifies the following:
(a) if R⁸ is a polyetheroligomer,
either -CO-NH-R⁵ -
or -CO-
or -CH₂-CH₂-CH₂-;
(b) if R⁸ is a polyesteroligomer,
either -O-CO-NH-R⁵-NH-CO-NH-R⁵ -
or -O-CO-;
(c) if R⁸ is a poly(butadiene/acrylnitrile)-oligomer
-CH₂-CH₂-CO-NH-R⁵-,
where in all cases
R⁵ has the above significance.

2. Prepolymers according to claim 1, characterised in that they contain on average three to four (meth-)acryl groups, three to four urethane groups and at least two urea groups in the molecule.

3. Prepolymers according to claim 1, wherein R⁸ is a polyetheroligomer of the formula: 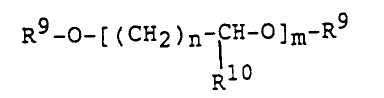 where
R¹⁰ = H or C1-C4-alkyl
n = an integer from 1 to 5 and
m = an integer from 1 to 250.

4. Process for the production of the prepolymers of any one of claims 1 to 3, characterized in that diamines having a basic polyether-, polyester- or butadiene/acrylnitrile-copolymer structure which have on average 1.5 to 2.5 NH terminal groups in the molecule, are converted by the addition of at least difunctional isocyanates in a mole ratio of NH-Group to isocyanate of 1: 1.05 to 1: 2.1 and the resultant adducts are subsequently reacted with hydroxyfunctional derivatives of acrylic and/or methacrylic acid.

5. Process to produce the prepolymers of any one of claims 1 to 3, characterised in that multi-isocyanates are partially reacted with hydroxyfunctional derivatives of acrylic and/or methacrylic acid and the remaining isocyanate functionalities are subsequently added to diamines having a basic polyether-, polyester- or butadiene/acrylnitrile - copolymer structure which on average have 1.5 to 2.5 NH terminal groups in the molecule.

6. Process according to claim 5, characterised in that the trimerization products of aliphatic, cycloaliphatic or aromatic diisocyanates are used as said multi-isocyanates.

7. Process according to claim 6, characterised in that as the trimerization products of diisocyanates, those of the trisisocyanato-triazine type are used.

8. Process according to claim 7, characterised in that said trisisocyanato-triazines are reacted with hydroxyalkyl(meth-) acrylates in a mole ratio of 1: 1.1 to 1:2.

9. Process according to Claim 8, characterised in that trimerized hexamethylene-diisocyanate of the triazine type is used in a mole ratio of triazine to hydroxyalkyl(meth-) acrylate of 1:1.8 to 1:2.

10. Prepolymers according to claim 1, characterised in that they contain at least two (meth-) acryl groups, at least two urethane groups and more than two urea groups in the molecule.

11. Process to produce the prepolymers of claim 1 or claim 10, characterised in that diamines having mole masses of 250 to 2,500 g/mole and having a basic polyether-, polyester- or butadiene/ acrylnitrile- copolymer structure, which on average have 1.5 to 2.5 NH-terminal groups in the molecule, are reacted by addition to diisocyanates in a mole ratio of diamine to diisocyanate of 1:1.05 to 1:2.1 and the resultant adducts are subsequently reacted with the hydroxyfunctional derivatives of acrylic and/or methacrylic acid.

12. Process according to claim 11, characterised in that said diamines are produced by the addition of diols in a mole mass range of 250 to 600 g/mole to diisocyanates in a mole ratio of diol to diisocyanate of 0.5 : 1 to 0.95 : 1 with the formation of a preadduct and the subsequent addition of a diamine in a mole ratio of preadduct to diamine of 1 : 1.1 to 1 : 2.1.

13. Process according to claim 11, characterised in that the prepolymers are produced by the phosgenation of diols of a mole mass of 250 to 6,000 g/mole followed by the subsequent reaction of the phosgenation products with diamines in a mole ratio of 1 : 1.05 to 1:2.

14. Light-initiated, radically curing masses containing:
(A) 5 to 90 parts by weight of at least one prepolymer according to claims 1 to 3 or 10 and
(B) 0.1 to 10 parts by weight of at least one photoinitiator, which during irradiation in the wave length range of 315-550 nm disintegrates to form free radicals.

15. Mass according to Claim 14, characterised in that it contains 0.5 to 4 parts by weight of component (B).

16. Light-initiated, radically polymerizable masses containing:
A) 5 to 80 parts by weight of at least one prepolymer according to claims 1 to 3 or 10,
B) 0.1 to 2 parts by weight of one or more photoinitiators selected from the bisacylphosphine oxide group
C) 0.1 to 30 parts by weight of at least one acid monomer of the general formula: 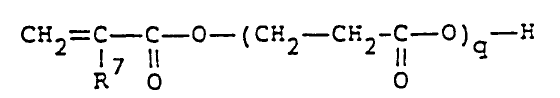 where q is zero or an integer of from 1 to 10 and R⁷ is a hydrogen atom or a methyl group,
D) 0 to 60 parts by weight of diluent monomers selected from the group of hydroxyalkyl(meth-)acrylates, alkyl(meth-) acrylates, aralkyl(meth-)acrylates, cycloalkyl(meth)acrylates or alkoxyalkyl(meth-)acrylates.

17. In the absence of oxygen and preferably in the presence of metal contact, radically curing one-component masses containing:
A) 5 to 80 parts by weight of at least one prepolymer according to claims 1 to 3 or 10
B) 0.3 to 2.0 parts by weight of cumenehydroperoxide
C) 0.1 to 2.0 parts by weight of saccharin
D) 0.1 to 2.0 parts by weight of an aromatic tertiary amine
E) 0 to 60 parts by weight of modifiers such as stabilizers, complexing agents, diluent monomers and acid monomers.

18. During heat input, radically curing one-component masses containing:
A) 5 to 80 parts by weight of at least one prepolymer according to claims 1 to 3 or 10
B) 0.1 to 5 parts by weight of a peroxide compound selected from the group of diacylperoxides, peresters and hydroperoxides
C) 20 to 60 parts by weight of diluent monomers and acid monomers
D) 0 to 60 parts by weight of modifiers such as stabilizers and complexing agents.

19. At room temperature, radically curing two-component preparations containing:
A) 5 to 80 parts by weight of at least one prepolymer according to claims 1 or 3 or 10
B) a Redox initiation system consisting of ast least one peroxide compound and at least one amine and, optionally, a transition metal compound, where the peroxide compounds and amine are each contained separately in one component of the preparation
C) Diluent monomers and acid monomers
D) Optionally further modifiers such as stabilizers, complexing agents, adhesive agents, highly polymer thickening agents, thixotropifying agents.

20. As a result of at least two radical forming mechanisms radically curing one-component preparations containing:
A) 5 to 80 parts by weight of at least one prepolymer according to claims 1 to 3 or 10
B) 0.1 to 2 parts by weight of at least one photo-initiator, which in a wave length range of 315 to 550 nm disintegrates into free radicals
C) 0.1 to 3 parts by weight of at least one peroxide compound, which either by the action of heat, or catalytically in the absence of oxygen disintegrates to form free radicals
D) 20 to 60 parts by weight of diluent monomers and acid monomers
E) optionally further modifiers such as accelerators, stabilizers, complexing agents, adhesive agents, high polymer thickeners, thixotropifying agents.

21. Mass according to any one of claims 14 to 20, characterised in that it contains 15 to 45 parts by weight of the component (A).

22. Use of the masses according to any one of claims 14 to 21 for bonding, sealing, potting and coating of substrates.

## Revendications

1. Prépolymères de formule générale 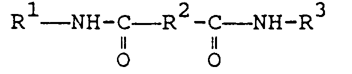 à masses moléculaires dans la plage de 1 000 à 20 000 g/mole et comportant dans leur molécule en moyenne au moins deux groupes (méth)acryle ainsi qu'en outre au moins deux groupes urée et éventuellement au moins deux groupes uréthanne, les substituants R¹, R² et R³ ayant les significations suivantes:
- R¹ et R³, qui peuvent être identiques ou différents, représentent chacun, indépendamment l'un de l'autre, un radical (méth)acrylate de formule 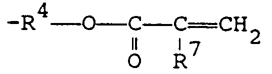 avec
R⁴ = alkylène, alcoxyalkylène
et R⁷ = H, CH₃;
ou
- R¹ et R³ sont identiques et représentent chacun un radical de formule 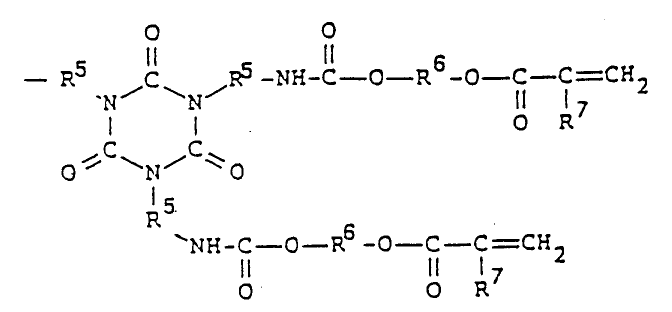 où
R⁵ = alkylène, cycloalkylène, arylène, alkarylène;
R⁶ = alkylène, alcoxyalkylène, polyalcoxylène;
R⁷ = H, CH₃;
- R² est un radical diamino divalent substitué, choisi dans l'ensemble de groupes de formules 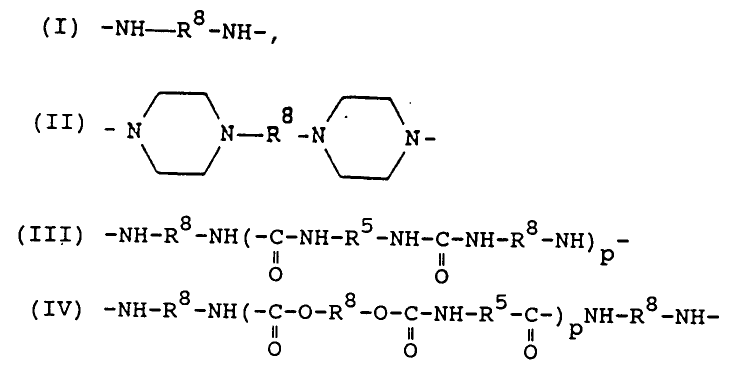 dans lesquelles
R⁵ = alkylène, cycloalkylène, arylène ou alkarylène,
R⁸ représente un oligomère polyéther, oligomère polyester ou oligomère poly(butadiène/acrylonitrile) linéaires, qui portent chacun à leurs extrémités de chaîne un radical pontant organique divalent R⁹, et
p est un nombre entier allant de 1 à 120,
et dans lesquelles
R⁹ a l'une des significations suivantes:
a) lorsque R⁸ est un oligomère polyéther,
soit -CO-NH-R⁵-,
soit -CO-,
ou -CH₂-CH₂-CH₂-;
b) lorsque R⁸ est un oligomère polyester,
soit -O-CO-NH-R⁵-NH-CO-NH-R⁵-,
soit -O-CO-;
c) lorsque R⁸ est un oligomère poly(butadiène/acrylonitrile),
-CH₂-CH₂-CO-NH-R⁵-,
R⁵ ayant dans tous les cas la signification donnée plus haut.

2. Prépolymères selon la revendication 1, caractérisés en ce qu'ils contiennent dans leur molécule en moyenne trois à quatre groupes (méth)acryle, trois à quatre groupes uréthanne et au moins deux groupes urée.

3. Prépolymères selon la revendication 1, dans lesquels R⁸ est un oligomère polyéther de formule 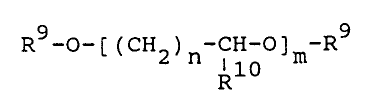 dans laquelle
R¹⁰ = H ou un groupe alkyle en C₁-C₄,
n est un nombre entier allant de 1 à 5 et
m est un nombre entier allant de 1 à 250.

4. Procédé pour la préparation des prépolymères selon l'une des revendications 1 à 3, caractérisé en ce que l'on fait réagir des diamines avec une structure de base polyéther, polyester ou copolymère butadiène/acrylonitrile, qui comporte en moyenne dans sa molécule 1,5 à 2,5 groupes terminaux NH, par formation de produits d'addition avec des isocyanates au moins bifonctionnels, support molaire groupes NH: isocyanates de 1:1,05 à 1:2,1, et on fait réagir ensuite les produits d'addition obtenus avec des dérivés à fonction hydroxyle de l'acide acrylique et/ou de l'acide méthacrylique.

5. Procédé pour la préparation des prépolymères selon l'une des revendications 1 à 3, caractérisé en ce que l'on fait réagir partiellement des multi-isocyanates avec des dérivés à fonction hydroxyle de l'acide acrylique et/ou de l'acide méthacrylique et on fixe ensuite les fonctionnalités isocyanate restantes par addition sur des diamines à structure de base polyéther, polyester ou copolymère butadiène/acrylonitrile, qui comportent dans leur molécule en moyenne 1,5 à 2,5 groupes terminaux NH.

6. Procédé selon la revendication 5, caractérisé en ce que l'on utilise comme multi-isocyanates les produits de trimérisation de diisocyanates aliphatiques, cycloaliphatiques ou aromatiques.

7. Procédé selon la revendication 6, caractérisé en ce que l'on utilise comme produits de trimérisation des diisocyanates ceux du type des tris-isocyanato-triazines.

8. Procédé selon la revendication 7, caractérisé en ce que les tris-isocyanato-triazines sont mises en réaction avec des (méth)acrylates d'hydroxyalkyle en un rapport molaire de 1:1,1 à 1:2.

9. Procédé selon la revendication 8, caractérisé en ce que l'on utilise un hexaméthylène-diisocyanate trimérisé du type triazine en un rapport molaire triazine: (méth)acrylates d'hydroxyalkyle de 1:1,8 à 1:2.

10. Prépolymères selon la revendication 1, caractérisés en ce qu'ils contiennent dans leur molécule au moins deux groupes (méth)acryle, au moins deux groupes uréthanne et plus de deux groupes urée.

11. Procédé pour la préparation des prépolymères selon la revendication 1 ou 10, caractérisé en ce que l'on utilise des diamines à masses moléculaires de 250 à 2 500 g/mole et à structure de base polyéther, polyester ou copolymère butadiène/acrylonitrile, qui comportent dans leur molécule en moyenne 1,5 à 2,5 groupes terminaux NH, par addition sur des diisocyanates en un rapport molaire diamine:diisocyanate de 1:1,05 à 1:2,1, et on fait ensuite réagir les produits d'addition résultants avec des dérivés à fonction hydroxyle de l'acide acrylique et/ou de l'acide méthacrylique.

12. Procédé selon la revendication 11, caractérisé en ce que les diamines sont produites par addition de diols dans la plage de masse moléculaires de 250 à 600 g/mole sur des diisocyanates, en un rapport molaire diol: diisocyanate de 0,5:1 à 0,95:1, avec formation d'un pré-adduit, et addition subséquente d'une diamine en un rapport molaire pré-adduit:diamine de 1:1,1 à 1:2,1.

13. Procédé selon la revendication 11, caractérisé en ce que les prépolymères sont produits par phosgénation de diols ayant une masse moléculaire de 250 à 6 000 g/mole et réaction subséquente des produits de phosgénation avec des diamines en un rapport molaire de 1:1,05 à 1:2.

14. Matières durcies par polymérisation radicalaire photoamorcée, contenant:
(A) de 5 à 90 parties en masse d'au moins un prépolymère selon les revendications 1 à 3 ou 10, et
(B) de 0,1 à 10 parties en masse d'au moins un photo-amorceur qui, sous irradiation dans une plage de longueurs d'onde de 315 à 550 nm, se décompose avec formation de radicaux libres.

15. Matière selon la revendication 14, caractérisée en ce que qu'elle contient de 0,5 à 4 parties en masse du composant (B).

16. Matières subissant une polymérisation radicalaire photo-amorcée, contenant
(A) de 5 à 80 parties en masse d'au moins un prépolymère selon les revendications 1 à 3 ou 10,
(B) de 0,1 à 2 parties en masse d'un ou plusieurs photo-initiateurs choisis dans le groupe des oxydes de bisacylphosphines,
(C) de 0,1 à 30 parties en masse d'au moins un monomère acide de formule générale 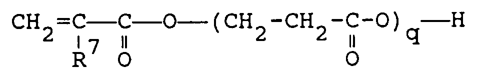 dans laquelle
q est zéro ou un nombre entier allant de 1 à 10 et R⁷ représente un atome d'hydrogène ou le groupe méthyle,
(D) de 0 à 60 parties en masse de monomères diluants choisis dans le groupe des (méth)acrylates d'hydroxyalkyle, (méth)acrylates d'alkyle, (méth)acrylates d'aralkyle, (méth)acrylates de cycloalkyle et (méth)acrylates d'alcoxyalkyle.

17. Matières à un seul composant, durcissant par polymérisation radicalaire en absence d'oxygène et de préférence au contact de métaux, contenant
(A) de 5 à 80 parties en masse d'au moins un prépolymère selon les revendications 1 à 3 ou 10,
(B) de 0,3 à 2,0 parties en masse d'hydroperoxyde de cumène,
(C) de 0,1 à 2,0 parties en masse de saccharine,
(D) de 0,1 à 2,0 parties en masse d'une amine tertiaire aromatique,
(E) de 0 à 60 parties en masse de modificateurs tels que des stabilisants, complexants, monomères diluants et monomères acides.

18. Matières à un seul composant, durcissant par polymérisation radicalaire lors d'apport de chaleur, contenant
(A) de 5 à 80 parties en masse d'au moins un prépolymère selon les revendications 1 à 3 ou 10,
(B) de 0,1 à 5 parties en masse d'un composé de type peroxyde choisi dans le groupe des peroxydes de diacyle, peresters et hydroperoxydes,
(C) de 20 à 60 parties en masse de monomères diluants et monomères acides,
(D) de 0 à 60 parties en masse de modificateurs tels que des stabilisants et complexants.

19. Compositions à deux composants, durcissant par polymérisation radicalaire à la température ambiante, contenant
(A) de 5 à 80 parties en masse d'au moins un prépolymère selon les revendications 1 à 3 ou 10,
(B) un système d'amorçage rédox constitué d'au moins un composé de type peroxyde et d'au moins une amine ainsi qu'éventuellement d'un composé à base d'un métal de transition, les composés de type peroxyde et l'amine étant contenus séparément chacun dans un composant de la composition,
(C) des monomères diluants et des monomères acides,
(D) éventuellement d'autres modificateurs tels que des stabilisants, complexants, agents favorisant l'adhérence, épaississants hauts polymères, agents de thixotropie.

20. Compositions à un seul composant, durcissant par suite d'au moins deux mécanismes de formation de radicaux, contenant
(A) de 5 à 80 parties en masse d'au moins un prépolymère selon les revendications 1 à 3 ou 10,
(B) de 0,1 à 2 parties en masse d'au moins un photo-initiateur qui, dans la plage de longueurs d'onde de 315 à 550 nm, se décompose en radicaux libres,
(C) de 0,1 à 3 parties en masse d'au moins un composé de type peroxyde qui se décompose soit thermiquement, soit catalytiquement en absence d'oxygène, avec formation de radicaux libres,
(D) de 20 à 60 parties en masse de diluants monomères et monomères acides,
(E) éventuellement d'autres modificateurs tels que des accélérateurs, stabilisants, complexants, agents favorisant l'adhérence, épaississants hauts polymères, agents de thixotropie.

21. Matière selon l'une des revendications 14 à 20, caractérisée en ce qu'elle contient de 15 à 45 parties en masse du composant (A).

22. Utilisation des matières selon l'une des revendications 14 à 21, pour coller, rendre étanche, sceller et revêtir des supports.
